Europäisches Patentamt

European Patent Office

Office européen des brevets

(19)

(11) Numéro de publication : **0 349 399 B1**

## (12) FASCICULE DE BREVET EUROPEEN

(45) Date de publication du fascicule du brevet :
**16.09.92 Bulletin 92/38**

(51) Int. Cl.⁵ : **A47C 7/30,** A47C 31/06

(21) Numéro de dépôt : **89401796.1**

(22) Date de dépôt : **23.06.89**

(54) **Organe de liaison entre les fils de tension d'un coussin de siège, et coussin de siège.**

(30) Priorité : **30.06.88 FR 8808872**

(43) Date de publication de la demande :
**03.01.90 Bulletin 90/01**

(45) Mention de la délivrance du brevet :
**16.09.92 Bulletin 92/38**

(84) Etats contractants désignés :
**BE DE ES GB IT NL SE**

(56) Documents cités :
**FR-A- 1 282 875
FR-A- 2 013 955
FR-A- 2 086 918
US-A- 2 642 932**

(73) Titulaire : **CESA COMPAGNIE EUROPEENNE DE SIEGES POUR AUTOMOBILES
20, rue Paul-Vaillant-Couturier
F-92300 Levallois-Perret (FR)**

(72) Inventeur : **Fourrey, François
34 rue du Petit Chénois
F-25200 Montbeliard (FR)**
Inventeur : **Deley, Serge
11 Route d'Audincourt
F-25230 Seloncourt (FR)**

(74) Mandataire : **Mestre, Jean et al
c/o CABINET LAVOIX 2, place d'Estienne d'Orves
F-75441 Paris Cédex 09 (FR)**

EP 0 349 399 B1

**Description**

Les coussins de siège, et notamment les coussins de siège de véhicule automobile, comportent généralement une armature formée par un cadre à l'intérieur duquel est montée une nappe de fils de tension destinée à supporter un rembourrage. Les fils de tension sont le plus souvent recourbés en zigzag entre les deux côtés opposés du cadre mais sont disposés parallèlement les uns aux autres. Sans lien entre eux, ils ont tendance, au bout d'une certaine période d'utilisation, à s'écarter les uns des autres et à rendre le siège trop mou.

On les relie donc souvent, comme décrit dans le FR-A- 1 282 875, conformément au préambule de la revendication 1, au moyen d'organes transversaux qui sont agrafés sur des parties rectilignes des fils successifs. Toutefois la mise en place de ces organes exige un outillage d'agrafage spécifique, ce qui est très coûteux et demande un temps relativement long.

Une solution est aussi décrite dans le document US 2 642 942 où l'on utilise des organes transversaux pour établir une liaison amovible dont ni le secteur technique ni l'application ne sont précisés.

La présente invention a pour but de remédier à cet inconvénient en fournissant un organe de liaison des fils de tension qui assure le maintien d'un écartement déterminé entre les différents fils et rigidifie localement le coussin, tout en étant très simple et peu coûteux à installer.

Cette invention a en effet pour objet un organe de liaison du type exposé dans le préambule de la revendication principale et dont les particularités ressortent notamment de la partie caractérisante de celle-ci.

D'autres modes d'éxécution sont l'objet des revendications dépendantes.

De préférence, la barre comporte un rebord longitudinal sur chacun de ses côtés et chaque patte de serrage se trouve à égale distance de deux encoches pratiquées dans les deux rebords opposés de la barre.

Chaque fil de tension se trouve ainsi immobilisé dans une position bien déterminée et l'organe de liaison assure à l'endroit où il se trouve une rigidification réelle de l'ensemble du coussin.

Selon une autre caractéristique, la barre plate est munie à chacune de ses extrémités d'un crochet. Elle peut ainsi, lorsqu'elle est montée sur une armature d'assise, servir à la fixation d'une bavette arrière du dossier, ou analogue.

La description ci-dessous de modes de réalisation, donnés à titre d'exemple non limitatif et représenté aux dessins annexés, fera d'ailleurs ressortir les avantages et caractéristiques de l'invention. Sur ces dessins :

La figure 1 est une vue de dessus d'une armature de coussin de siège munie d'un organe de liaison selon l'invention.

La figure 2 est une vue partielle, à plus grande échelle, de l'organe de liaison de la figure 1.

La figure 3 est une vue analogue à la figure 2 d'une variante de réalisation.

La figure 4 est une vue en perspective d'un siège dont l'assise est munie d'un organe de liaison selon l'invention.

La figure 5 est une vue de détail d'un crochet d'extrémité de l'organe de liaison.

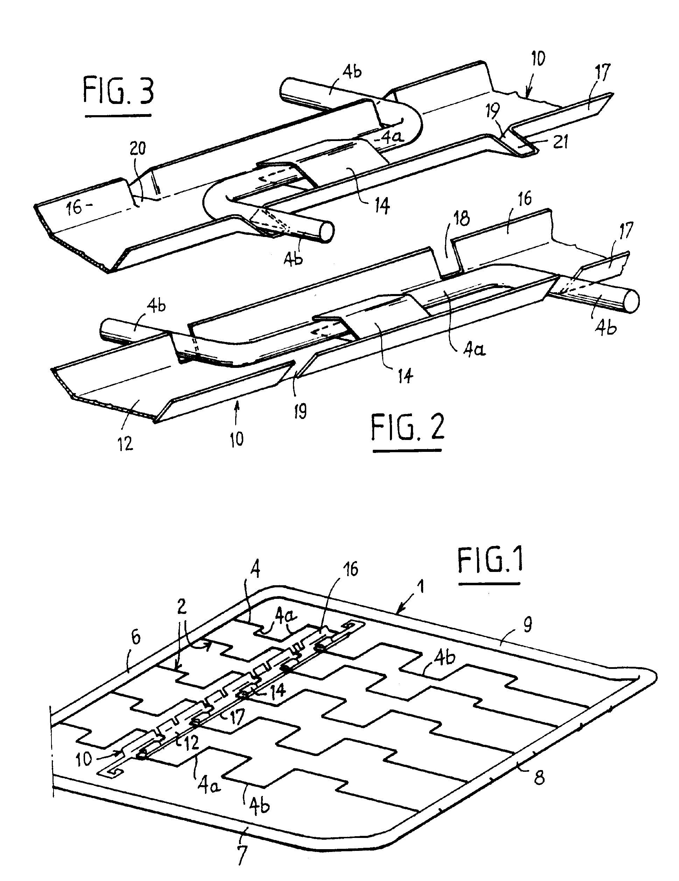

L'armature de coussin de siège représentée sur la Fig.1 comporte, de manière classique, un cadre d'armature 1 à l'intérieur duquel est montée une nappe 2 de fils de tension destinée à supporter un rembourrage. La nappe 2 est en fait constituée par un certain nombre de fils 4, parallèles entre eux, et fixés à leurs extrémités sur deux barreaux opposés, respectivement 6 et 8, du cadre 1. Tous les fils 4 sont repliés en zigzag de manière identique, c'est-à-dire qu'ils comportent chacun une succession de portions 4a parallèles aux barreaux 6 et 8, et de portions 4b parallèles aux deux autres côtés 7 et 9 du cadre 1. Les portions 4a ou 4b successives peuvent avoir des dimensions différentes mais elles sont identiques sur tous les fils 4.

En au moins un emplacement de la nappe 2, les fils 4 sont reliés entre eux par un organe de liaison 1O constitué par une barre plate 12 munie à intervalles réguliers de pattes 14 de pincement chacune d'une portion rectiligne 4a de 1 un des fils 4.

Dans le mode de réalisation représenté, chaque patte de serrage 14 a été découpée dans la barre plate 12 et repoussée vers l'extérieur d'une distance voisine du diamètre du fil de tension 4 qu'elle doit retenir. Cette patte est en outre repliée en un V à l'envers, largement ouvert, qui permet le passage du fil au droit de son sommet mais dont le bord longitudinal libre est espacé de la bande plate d'une distance inférieure au diamètre du fil et est suffisamment proche de la barre 12 pour interdire la sortie du fil par un déplacement transversal. Le fil est ainsi solidement maintenu et serré contre l'organe de liaison 1O.

Sur l'un au moins de ses bords longitudinaux la barre plate 12 comporte un rebord muni, à intervalles réguliers, d'encoches dont le diamètre est légèrement supérieur à celui du fil de tension 4. De préférence toutefois, comme représenté, la barre 12 comporte deux parois latérales 16 et 17 légèrement inclinées vers l'extérieur et munies chacune d'encoches, 18, 19 respectivement, et ces encoches sont espacées les unes des autres de telle sorte que la distance entre une encoche 18 et une encoche 19, situées de part et d'autre d'une patte de serrage 14, correspond à la longueur d'une portion rectiligne transversale 4a d'un fil de tension 4.

Par ailleurs, le nombre des ensembles formés par une patte de serrage 14 et deux encoches 18 et 19 situées de part et d'autre de cette patte correspond au nombre de fils de tension 4 de la nappe. Ainsi, comme le montrent plus particulièrement les Fig.1 et 2, lorsqu'un organe de liaison 1O est monté sur une armature de coussin parallèlement aux bords 6 et 8 du cadre d'armature, c'est-à-dire parallèlement aux portions transversales 4a des fils de tension 4, chacun de ces fils est maintenu par une patte de serrage 14 qui retient la portion transversale correspondante 4a, tandis qu'il est bloqué latéralement par le passage des portions longitudinales 4b dans les encoches des bords latéraux 16 et 17. L'une de ces portions longitudinales traverse en effet une encoche 18 de la paroi latérale 16 tandis que l'autre traverse une encoche 19 de la paroi opposée 17.

L'organe de liaison 1O, étant réalisé en un matériau relativement rigide, assure une rigidification de la portion correspondante de l'armature et en outre interdit le déplacement latéral des fils de tension c'est-à-dire les maintient à un écartement bien déterminé les uns par rapport aux autres.

Les encoches 18 et 19 peuvent être formées par simple découpe des parois latérales 16 et 17 ainsi que représenté sur la Fig.2.

Elles peuvent également, selon une variante de réalisation représentée sur la Fig.3, être formées par emboutissage local des parois latérales 16 et 17 de l'organe de liaison 1O de sorte que la barre plate est prolongée au droit de chaque encoche par une languette 2O,21 de support du fil de tension 4b.

Il apparaîtra clairement qu'un seul organe de liaison 1O peut suffire à assurer à une armature de coussin la rigidification et le maintien des fils de tension désirés. Toutefois plusieurs organes de liaison semblables 1O peuvent facilement être montés sur une même armature de coussin.

L'installation de cet organe de liaison se fait en effet extrêmement facilement par simple emboîtement des fils de tension dans les encoches et sous les pattes de serrage, sans outillage particulier ni pièces supplémentaires.

Cet organe de liaison est, en outre, parfaitement adapté aussi bien aux armatures de coussin d'assise qu'aux armatures de coussin de dossier.

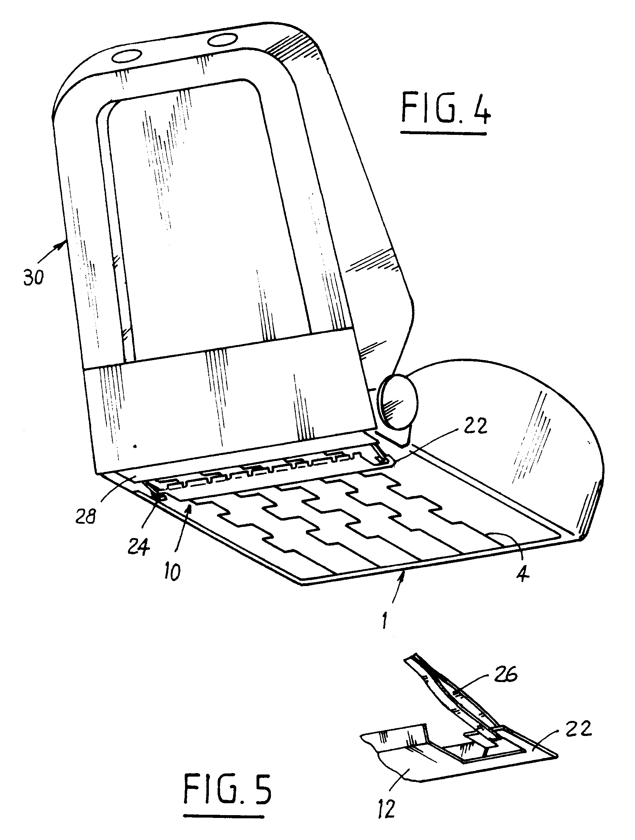

Lorsqu'il est destiné à une armature de coussin d'assise, l'organe de liaison est de préférence prolongé à chacune de ses extrémités par un crochet 22, 24 qui forme un prolongement de la barre plate 12 et est situé dans le plan de cette barre comme le montre clairement les Fig.4 et 5. Les crochets 22 et 24 des deux extrémités de l'organe de liaison permettent la fixation facile et sure sur chacun d'eux d'une boucle 26 appartenant à un élément du garnissage du dossier du siège. Par exemple, dans le mode de réalisation représenté sûr la Fig.1, chacune des boucles 26 est solidaire de l'une des extrémités de la bavette 28 du garnissage du dossier 3O du siège représenté.

On obtient ainsi, de manière très simple, au moyen d'un organe peu coûteux et facile à mettre en place, un accroissement de la résistance d'un coussin de siège et par suite de sa durée de vie et de la persistance du confort qu'il apporte.

## Revendications

1. Organe de liaison entre les fils de tension d'un coussin de siège tel qu'un siège de véhicule automobile comportant, à l'intérieur d'un cadre d'armature (1), une nappe de fils de tension (4) disposés parallèlement les uns aux autres et configurés en zigzags de manière à avoir des parties rectilignes (4a, 4b) successives qui sont alternativement longitudinales (4b) et transversales (4a) caractérisé en ce qu'il comporte une barre plate, allongée (12) transversale qui est pourvue sur au moins l'un de ses bords longitudinaux d'une paroi latérale (16) et qui est munie à intervalles réguliers d'une part de pattes (14) transversales de serrage chacune associée à une partie rectiligne transversale (4a) d'un fil pour la maintenir contre la barre (12), et d'autre part, de moyens de centrage (18,19,20,21) des fils par rapport à ces pattes, portés par cette paroi latérale (16).

2. Organe de liaison suivant la revendication 1, caractérisé en ce que ces moyens de centrage sont des encoches (18,19) découpées dans la paroi latérale (16,-17) de l'organe de liaison.

3. Organe de liaison suivant la revendication 1, caractérisé en ce que ces moyens de centrage sont des encoches (18,19) prolongées par des languettes (20, 21) formées par emboutissage de la paroi latérale (16,17) de l'organe de liaison.

4. Organe de liaison suivant l'une des revendications précédentes, caractérisé en ce que chaque patte de serrage (14) se trouve à mi-distance entre deux encoches des bords opposés (18,19).

5. Organe de liaison suivant l'une des revendications précédentes, caractérisé en ce que chaque patte de serrage (14) est découpée dans la barre-plate (12) et repoussée vers l'extérieur.

6. Organe de liaison suivant l'une des revendications précédentes, caractérisé en ce que chaque patte de serrage (14) a une section en forme de V à l'envers et l'écartement entre son bord libre et la barre plate (12) est inférieur au diamètre du fil de tension (4).

7. Organe de liaison suivant l'une des revendications précédentes, caractérisé en ce qu'il comporte à chacune des extrémités de la barre plate (12), un crochet (22,23) situé dans le plan de cette plaque.

8. Organe de liaison suivant l'une des revendications 1 à 7, caractérisé en ce que chacune des encoches a un diamètre légèrement supérieur à celui du fil de tension (4) et constitue un passage pour une portion rectiligne (4b) de ce fil qui est perpendiculaire à la portion transversale retenue par la patte de serrage.

9. Coussin de siège comportant une armature formée par un cadre (1) et une nappe (2) de fils de tension en zigzags (4) disposés parallèlement les uns aux autres, caractérisé en ce qu'il comporte au moins un organe de liaison suivant l'une des revendications 1 à 8 dont la barre plate (12) est munie d'une patte de serrage pour chaque fil de tension (4) et d'encoches espacées d'une distance correspondant à la longueur des portions rectilignes transversales (4a) de chacun de ces fils.

10. Coussin d'assise de siège suivant la revendication 9 , caractérisé en ce que l'organe de liaison (1O) comporte à chacune de ses extrémités un crochet (22,24).

**Patentansprüche**

1. Verbindungsorgan zwischen den Spanndrähten eines Sitzkissens beispielsweise eines Kraftfahrzeugsitzes, der in einem Gestellrahmen (1) eine Lage von Spanndrähten (4) besitzt, die zueinander parallel angeordnet und zickzackförmig gebogen sind, so daß sie aufeinanderfolgende geradlinige Teile (4a, 4b) besitzen, die abwechselnd sich in Längsrichtung (4b) und in Querrichtung (4a) erstrecken, dadurch gekennzeichnet, daß es eine flache, langgestreckte, sich in Querrichtung erstreckende Stange (12) umfaßt, die an wenigstens einem ihrer Längsränder mit einer Seitenwand (16) versehen ist und die in regelmäßigen Abständen einerseits sich in Querrichtung erstreckende Klemmlappen (14), deren jeder einem geradlinigen Querteil (4a) eines Drahts zugeordnet ist, um ihn an die Stange (12) angedrückt zu halten, und andererseits von dieser Seitenwand (16) getragene Einrichtungen (18, 19, 2O, 21) zum Zentrieren der Drähte bezüglich der Lappen aufweist.

2. Verbindungsorgan nach Anspruch 1, dadurch gekennzeichnet, daß die Zentriereinrichtungen in der Seitenwand (16, 17) des Verbindungsorgans ausgeschnittene Aussparungen (18, 19) sind.

3. Verbindungsorgan nach Anspruch 1, dadurch gekennzeichnet, daß die Zentriereinrichtungen Aussparungen (18, 19) sind, die durch Zungen (2O, 21) verlängert sind, die durch Tiefziehen der Seitenwand (16, 17) des Verbindungsorgans gebildet sind.

4. Verbindungsorgan nach einem der vorhergehenden Ansprüche, dadurch gekennzeichnet, daß jeder Klemmlappen (14) sich in der Mitte zwischen zwei Aussparungen der entgegengesetzten Ränder (18, 19) befindet.

5. Verbindungsorgan nach einem der vorhergehenden Ansprüche, dadurch gekennzeichnet, daß jeder Klemmlappen (14) aus der flachen Stange (12) ausgeschnitten und nach außen gedrückt ist.

6. Verbindungsorgan nach einem der vorhergehenden Ansprüche, dadurch gekennzeichnet, daß jeder Klemmlappen (14) die Form eines umgekehrten V hat und daß der Abstand seines freien Randes von der flachen Stange (12) kleiner als der Durchmesser des Spanndrahts (4) ist.

7. Verbindungsorgan nach einem der vorhergehenden Ansprüche, dadurch gekennzeichnet, daß es an jedem Ende der flachen Stange (12) einen in der Ebene dieser Stange liegenden Haken (22, 23) aufweist.

8. Verbindungsorgan nach einem der Ansprüche 1 bis 7, dadurch gekennzeichnet, daß jede Aussparung einen Durchmesser hat, der etwas größer als der des Spanndrahts (4) ist, und einen Durchgang für einen geradlinigen Abschnitt (4b) des Drahts bildet, der zu dem von dem Klemmlappen festgehaltenen Querabschnitt senkrecht ist.

9. Sitzkissen, bestehend aus einem Gestell, das von einem Rahmen (1) und einer Lage (2) von zickzackförmigen, zueinander parallel angeordneten Spanndrähten (4) gebildet ist, dadurch gekennzeichnet, daß es wenigstens ein Verbindungsorgan nach einem der Ansprüche 1 bis 8 besitzt, dessen flache Stange (12) für jeden Spanndraht (4) mit einem Klemmlappen und mit Aussparungen versehen ist, deren Abstand voneinander der Länge der geradlinigen Querabschnitte (4a) jedes Drahts entspricht.

10. Kissen für die Sitzfläche eines Sitzes nach Anspruch 9, dadurch gekennzeichnet, daß das Verbindungsorgan (1O) an jedem seiner Enden einen Haken (22, 24) aufweist.

**Claims**

1. A member for connecting the tension wires in a cushion of a seat such as a motor vehicle seat, comprising, inside a reinforcement frame (1), a layer of tension wires (4) arranged parallel to each other and of zigzag configuration so as to have successive rectilinear parts (4a, 4b) which are alternately longitudinal (4b) and transverse (4a), characterised in that it comprises a transverse, elongated, flat bar (12) which is provided with a lateral wall (16) on at least one of its longitudinal edges and which is provided at regular intervals firstly with transverse gripping lugs (14), each of which is associated with a transverse rectilinear part (4a) of a wire in order to hold the latter against the bar (12), and secondly with means (18, 19, 20, 21) for centering the wires in relation to these lugs and carried by the said lateral wall (16).

2. A connecting member according to claim 1, characterised in that the said centering means are notches (18, 19) cut out of the lateral wall (16, 17) of the connecting member.

3. A connecting member according to claim 1, characterised in that the said centering means are notches (18, 19) extended by tongues (20, 21) formed by swaging the lateral wall (16, 17) of the connecting member.

4. A connecting member according to any one of the preceding claims, characterised in that each gripping lug (14) is located half-way between two notches (18, 19) on opposite sides.

5. A connecting member according to any one of the preceding claims, characterised in that each gripping lug (14) is cut out of the flat bar (12) and pushed outwards.

6. A connecting member according to any one of the preceding claims, characterised in that each gripping lug (14) has a cross-section in the shape of an inverted V and the distance between its free edge and the flat bar (12) is less than the diameter of the tension wire (4).

7. A connecting member according to any one of the preceding claims, characterised in that at each end of the flat bar (12), it comprises a hook (22, 23) located in the plane of this plate.

8. A connecting member according to any one of claims 1 to 7, characterised in that each of the notches has a diameter which is slightly greater than that of the tension wire (4) and forms a passage for a rectilinear portion (4b) of this wire which is perpendicular to the transverse portion retained by the gripping lug.

9. A seat cushion comprising a reinforcement formed by a frame (1) and a layer (2) of zigzag tension wires (4) arranged parallel to each other, characterised in that it comprises at least one connecting member according to any one of claims 1 to 8, the flat bar (12) of which is provided with a gripping lug for each tension wire (4) and with notches spaced at a distance corresponding to the length of the transverse rectilinear portions (4a) of each of these wires.

10. A seat cushion according to claim 9, characterised in that the connecting member (10) comprises a hook (22, 24) at each of its ends.

FIG. 3

FIG. 2

FIG.1

FIG. 4

FIG. 5